# EUROPÄISCHE PATENTSCHRIFT

(11) **EP 2 066 987 B1**
(45) Veröffentlichungstag und Bekanntmachung des Hinweises auf die Patenterteilung: **29.02.2012**
(21) Anmeldenummer: 07817540.3
(22) Anmeldetag: 17.09.2007
(51) Int. Cl.: F24J 2/10, F24J 2/54

(54) **REFLEKTORVORRICHTUNG FÜR EINE SOLAREINRICHTUNG, SOLARANLAGE UND VERFAHREN ZUM BETRIEB EINER SOLARANLAGE**
REFLECTOR ARRANGEMENT FOR A SOLAR DEVICE, SOLAR UNIT AND METHOD FOR OPERATING A SOLAR UNIT
DISPOSITIF RÉFLECTEUR D'UN DISPOSITIF SOLAIRE, INSTALLATION SOLAIRE ET PROCÉDÉ DE FONCTIONNEMENT D'UNE INSTALLATION SOLAIRE

(30) Priorität: 18.09.2006 DE 102006043635
(43) Veröffentlichungstag der Anmeldung: 10.06.2009
(73) Patentinhaber: Ebert, Siegfried, 90518 ALtdorf (DE)
(72) Erfinder: Ebert, Siegfried, 90518 ALtdorf (DE)
(74) Vertreter: Epping - Hermann - Fischer
(86) Internationale Anmeldenummer: PCT/DE2007/001677
(87) Internationale Veröffentlichungsnummer: WO 2008/034422

(56) Entgegenhaltungen:
- DE-A1- 1 764 428
- DE-A1- 10 032 227
- US-A- 4 316 448
- US-A- 4 324 947
- US-A- 6 119 986

## Beschreibung

Die Erfindung bezieht sich auf eine Reflektorvorrichtung für eine Solareinrichtung zur Erhöhung von deren Wirkungsgrad. Die Solareinrichtung besteht beispielsweise aus einem oder mehreren flächigen solarthermischen Element/en (auch Solarkollektoren genannt) und/oder aus einem oder mehreren flächigen photovoltaischen Element/en (auch Photovoltaikpanels genannt). Die Erfindung betrifft weiterhin eine Solaranlage mit einer Reflektorvorrichtung.

Bekannte Spiegeleinrichtungen für Solaranlagen, die zusätzliche Sonnenstrahlung auf Sonnenkollektoren oder Solarzellen lenken sollen, sind beispielsweise in den Druckschriften DE 9010696 U1, DE 8704287 U1, DE 100 32 227 A1 und US 4,324,947 beschrieben.

Für die Verbesserung der Leistungsfähigkeit insbesondere von Flach- oder Röhrenkollektoren, wie sie für solarthermische Anlagen im Wohnhausbereich eingesetzt werden, sind die bekannten Konzepte bislang nicht geeignet, da sie sich wirtschaftlich nicht sinnvoll umsetzen lassen. Die mechanischen Einrichtungen und Spiegelflächen sind darin in der Regel als "fest installiert" beschrieben und deshalb allen Umwelteinflüssen ausgesetzt. Insbesondere müssen diese Einrichtungen für alle auftretenden Windlasten ausgelegt sein die, wegen der Segelartigkeit der Reflektoren, extrem hoch sind. Die erforderliche hohe mechanische Stabilität bedingt aufwendige Konstruktionen und führt zu hohen Kosten. Deshalb sind solche Konzepte, wenn überhaupt, nur für Großanlagen geeignet. Gleiches gilt für die Nachführung von Kollektoren zur senkrechten, optimalen Einstrahlung.

Bei der in DE 10032227 A1 vorgeschlagenen Lösung ist in baulicher Einheit mit der Solareinrichtung (Kollektor) ein verspiegeltes Rollo vorgesehen, das gleichzeitig als mechanischer Schutz für den Kollektor genutzt wird. Dazu weist das Kollektorfeld an der oberen Kante eine Drehachse für die Mechanik des Rollos auf. Seitlich am Kollektorfeld sind Arme vorgesehen, die das Rollo in die gewünschte Position über der Solareinrichtung bringen und dort halten. Diese Anordnung von Rollo und Dreheinrichtung erfordert eine aufwändige und daher teure Mechanik. Zur Nachstellung des Winkels zwischen Rollo und Solareinrichtung muss die gesamte Reflektormechanik gedreht werden was eine vergleichsweise hohe Drehkraft und demzufolge eine aufwändige und leistungsstarke Dreheinrichtung erfordert. Zudem ist zu bedenken, dass bereits ab Frühlingsanfang die Sonne mehr als einen Halbkreis durchwandert, was, um eine Abschattung der Solareinrichtung durch das Rollo zu vermeiden, eine 180°-Aufklappbarkeit des Rollos erfordert. Dies ist jedoch mit der vorgeschlagenen Mechanik nicht möglich. Schließlich sei noch darauf hingewiesen, dass beispielsweise bei Südausrichtung des Kollektors die morgendliche und abendliche Einstrahlung von dem vorgeschlagenen Rollo nur zu einem kleinen Teil auf den Kollektor reflektiert wird. Eine Verdoppelung der Einstrahlung ist daher entgegen der Aussage in dieser Druckschrift mit dieser Lösung nicht erreichbar.

Bei der in der US 4,324,947 vorgeschlagenen Anordnung sind zwar zur Erhöhung des Gewinns an zusätzlicher Einstrahlung zwei Spiegel vorgesehen. Aufgrund gleichartiger mechanischer Lösungsansätze gilt diesbezüglich auch hierzu das oben in Bezug auf die Druckschrift DE 10032227 A1 Gesagte analog.

Den nächstkommenden Stand der Technik spiegelt sich in der Schrift DE-A-1 764 428 wider.

Eine Aufgabe der vorliegenden Erfindung besteht darin, eine Reflektorvorrichtung für eine Solareinrichtung bereitzustellen, die auf technisch einfache Weise beispielsweise auf einem Hausdach montierbar und bei bestehenden Solareinrichtungen nachrüstbar ist und die mit einfachen technischen Mitteln auch widrigen Witterungsverhältnissen standhält.

Diese Aufgabe wird mit einer Reflektorvorrichtung mit den Merkmalen des Patentanspruches 1 gelöst. Vorteilhafte Ausgestaltungen und Weiterbildungen der Reflektorvorrichtung sind in den Unteransprüchen 2 bis 5 angegeben. Vorteilhafte Solaranlagen mit einer Reflektorvorrichtung gemäß der Erfindung sind in den Patentansprüchen 6 bis 13 angegeben. Verfahren zum Betrieb einer solchen Solaranlage sind in den Ansprüchen 14 und 15 angegeben.

Der Offenbarungsgehalt sämtlicher Patentansprüche wird hiermit ausdrücklich durch Rückbezug in die Beschreibung aufgenommen .

Unter den Begriff Reflektortuch fallen vorliegend neben gewebsartigen Stoffen sämtliche aufrollbaren Materialien wie beispielsweise großflächige Folien oder nebeneinander angeordnete Folienstreifen. Insbesondere sei diesbezüglich ein Folienverbund aus einer tragenden Folie aus einem Kunststoffmaterial und einer darauf aufgebrachten als Reflektorschicht dienenden Metallfolie, vorzugsweise eine Aluminiumfolie, als besonders geeignet erwähnt.

Bei einer Reflektorvorrichtung gemäß der Erfindung ist ein Reflektortuch vorgesehen, das mittels einer Gelenk- und/oder Teleskoparm-Mechanik von einer Schutzposition in eine Arbeitsposition und umgekehrt aus- und aufrollbar ist.

Bei einer vorteilhaften Weiterbildung hat das Reflektortuch semi-diffuse Reflexionseigenschaften. Damit wird zum einen vorteilhafterweise die Abhängigkeit vom Einstrahlungswinkel der Sonnenstrahlung verringert. Zum anderen wird damit ein Teil der von der Solareinrichtung abgegebenen Wärmestrahlung - bei über 80° heißen Sonnenkollektoren ein nicht unerheblicher Teil der Verlustleistung - reflektiert und teilweise wieder vom Sonnenkollektor absorbiert. Dadurch können bis zu etwa 30% der von der Solareinrichtung abgegebenen Wärmestrahlung auf den Sonnenkollektor zurückreflektiert werden. Zum anderen wird jede Art von Blendwirkung vermieden.

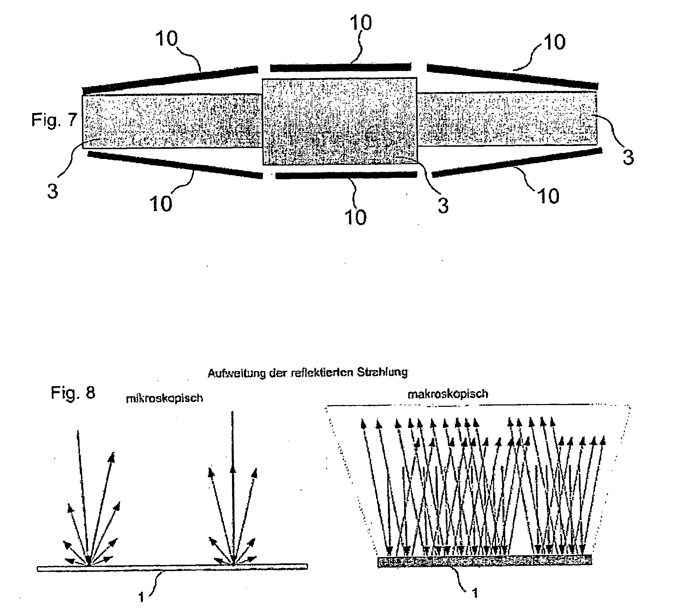

Bei einem semi-diffusen Reflektor ist zur Verringerung der Abhängigkeit vom Einstrahlwinkel ein Material eingesetzt, das mikroskopisch betrachtet, eine diffuse Reflexion bewirkt (man vergleiche das linke Bild in Figur 8). Betrachtet man eine große Fläche (>1 m2) entsteht damit eine aufgeweitete, gerichtete Rückstrahlung, d.h. reflektierte Strahlung (man vergleiche das rechte Bild in Figur 8).

Bei einem Spiegel entsteht demgegenüber eine exakt abgegrenzte Abbildung des Reflektors (vergleichbar mit dem Schattenwurf) die nur dann eine Wirkung hat, wenn das Abbild eine Schnittmenge mit der Kollektorfläche bildet. Bei sehr schrägem Lichteinfall ist das nicht der Fall. Die Nutzung eines semi-diffusen Materials vergrößert den Wirkungszeitraum (tages- aber auch jahreszeitlich gesehen), verringert aber die Spitzenleistung, die aber bei frontalem Lichteinfall meist schon hoch genug ist. Die Spitzenleistung stark zu erhöhen (zu verdoppeln) ist bei Nachrüstung aber oft nicht möglich weil andere Komponenten, wie z.B. der Wärmetauscher, überlastet werden.

Bei einer besonders bevorzugten Ausgestaltung befindet sich das Reflektortuch in der Schutzposition vollständig aufgerollt oder eingefahren in einem zumindest teilweise, vorzugsweise vollständig geschlossenen Kasten. Dadurch können negative Witterungseinflüsse weitergehend verringert werden. In dieser Position bietet das Reflektortuch Wind und Wetter wenig Angriffsfläche. Dadurch wird eine ausreichende Festigkeit durch einfache, langjährig erprobte mechanische Halterungen möglich und die Reflexionsfunktion bleibt über lange Zeit erhalten.

Bei einer vorteilhaften Weiterbildung ist ein Strahlungssensor vorgesehen, der bei einer über einem vorgegebenen Grenzwert liegenden Einstrahlungsleistung der Sonnenstrahlung den Transport des Reflektortuches in die Arbeitsposition aktiviert. Dadurch wird vorteilhafterweise sichergestellt, dass das Ausrollen bzw. Ausfahren des Reflektortuches grundsätzlich nur dann aktiviert wird, wenn es für den Betrieb der Solareinrichtung vorteilhaft ist, insbesondere wenn nutzbare Sonneneinstrahlung vorhanden ist und gegebenenfalls einen vorgegebenen Maximalwert nicht überschreitet. Letzteres ist insbesondere bei Photovoltaikanlagen von Bedeutung.

Bei einer weiterhin vorteilhaften Weiterbildung ist der vom Reflektortuch und der strahlungsempfangenden Oberfläche der Solareinrichtung eingeschlossene Winkel (Öffnungswinkel) mittels Drehen des Reflektortuches relativ zur Solareinrichtung einstellbar und zwar abhängig vom Winkel der Sonneneinstrahlung. Dies kann vorteilhafterweise dadurch automatisiert werden, indem ein Sensor vorgesehen ist, mit dem der Einstrahlungswinkel der Sonnenstrahlung auf die Solareinrichtung detektierbar ist. Dazu können vorteilhafterweise Sonnenstandssensoren, wie sie in der Automobiltechnik Anwendung finden, eingesetzt werden. Dadurch wird vorteilhafterweise sichergestellt, dass das Ausrollen bzw. Ausfahren des Reflektortuches grundsätzlich nur dann aktiviert wird, wenn die Sonneneinstrahlung aus einem Winkel erfolgt, bei dem der Wirkungsgrad der Solareinrichtung durch Reflexion der Sonneneinstrahlung am Reflektortuch gesteigert werden kann.

An Stelle eines Sensors, der den Winkel der Sonneneinstrahlung misst, kann eine elektronische Einrichtung zur Steuerung der Funktionen der Solaranlage vorgesehen sein, die den Einstrahlungswinkel der Sonnenstrahlung über eine Kalender-Uhrzeit-Funktion und den geografischen Daten des Standortes berechnet. Optional kann die elektronische Regelung auch die Berechnung der optimalen Winkeleinstellungen für die Reflektorvorrichtung vornehmen. Die Daten, Einstrahlungswinkel, optimalen Höhen und Längsachsen-Winkel können auch vorab berechnet und als Tabelle in der elektronischen Steuerung gespeichert werden.

Bei der Verwendung des Reflektortuches an solarthermischen Anlagen ist das Reflektortuch derart ausgestaltet, dass es sowohl zumindest einen Großteil des Sonnenspektrums als auch zumindest einen Großteil des Wellenspektrums eines schwarzen Strahlers reflektiert. Bevorzugt reflektiert es mehr als 90% des Sonnenspektrums und mehr als 90% des Wellenspektrums eines schwarzen Strahlers.

Bei einer ebenfalls vorteilhaften Ausgestaltungen einer erfindungsgemäßen Reflektorvorrichtung ist ein Windsensor vorgesehen, mit dem die Windgeschwindigkeit messbar ist. Dadurch kann erreicht werden, dass das Reflektortuch nur dann ausgefahren bzw. ausgerollt wird, wenn die Windgeschwindigkeit unter einem definierten Grenzwert liegt, bei dem eine Beschädigung des Reflektortuches und/oder der Mechanik ausgeschlossen ist.

Analog dazu sind bei weiterhin vorteilhaften Weiterbildungen ein Regen- und/oder ein Schneelastsensor vorgesehen, die ein Ausrollen bzw. Ausfahren des Reflektortuches nur dann zulassen, wenn möglichst keine für das Reflektortuch schädliche Witterungsbedingungen vorliegen.

Bei einer weitergehend vorteilhaften Reflektorvorrichtung ist eine Drehvorrichtung vorgesehen, deren Drehachse senkrecht zu einer Längsachsrichtung der Solareinrichtung verläuft, mit der die Längsachsrichtung des Reflektortuches relativ zur Längsachsrichtung der Solareinrichtung (auch "Längsachs-Winkel veränderbar ist. Dadurch kann vorteilhafterweise die Abbildung der Reflektorfläche des Reflektortuches in Abhängigkeit des Sonnenstandes auf die Kollektorfläche der Solareinrichtung erheblich verbessert werden.

An einer vorteilhaften anderweitigen Weiterbildung der Reflektorvorrichtung ist eine Reinigungsvorrichtung für das Reflektortuch vorgesehen, die bei jedem Aufrollen des Reflektortuches dieses reinigt. Hierzu eignet sich beispielsweise ein Vlies- oder Borstenstreifen, der entlang des Reflektortuches anliegt.

Die Reflektorvorrichtung wird vorteilhafterweise nur aktiviert wenn sie benötigt wird und anwendbar ist. D.h. wenn die folgenden Bedingungen gelten:
- es wird Energie benötigt;
- es ist nutzbare Sonneneinstrahlung vorhanden, sie übersteigt aber nicht ggf. vorgegebene Maximalwerte (nur bei Photovoltaik);
- die Sonneneinstrahlung erfolgt aus einem geeigneten Winkel;
- die Windgeschwindigkeit liegt unter einem definierten Grenzwert;
- es regnet oder schneit nicht, es ist keine Schneelast vorhanden.

Eine erfindungsgemäße Reflektorvorrichtung wird je nach Ausrichtung der Solareinrichtung (Neigung und Azimutwinkel) oberhalb, unterhalb oder neben der Solareinrichtung in Abhängigkeit von Sonnenstand und anderen Randbedingungen ausgerollt bzw. ausgefahren, um der Solareinrichtung zusätzlich zur direkten Einstrahlung Strahlung zuzuführen. Dazu werden im Wesentlichen verfügbare, technisch ausgereifte Komponenten aus der Markisentechnik eingesetzt, die wegen ihrer industriellen Produktion kostengünstig sind.

Die Mechanik einer erfindungsgemäßen Reflektorvorrichtung muss im Vergleich zu feststehenden Spiegelanordnungen vorteilhafterweise deutlich geringeren Stabilitätsanforderungen genügen, da sie nicht sturmsicher sein muss. Erhöht sich die Windgeschwindigkeit bei ausgefahrener Reflektoreinrichtung über einen definierten Grenzwert wird die Einrichtung teilweise oder ganz eingefahren. Gegenüber "nachgeführten" Kollektoren oder freistehenden, strahlnachführenden Spiegeln verringert sich der Aufwand für die Wirkungsgradsteigerung mittels einer Reflektorvorrichtung gemäß der Erfindung erheblich.

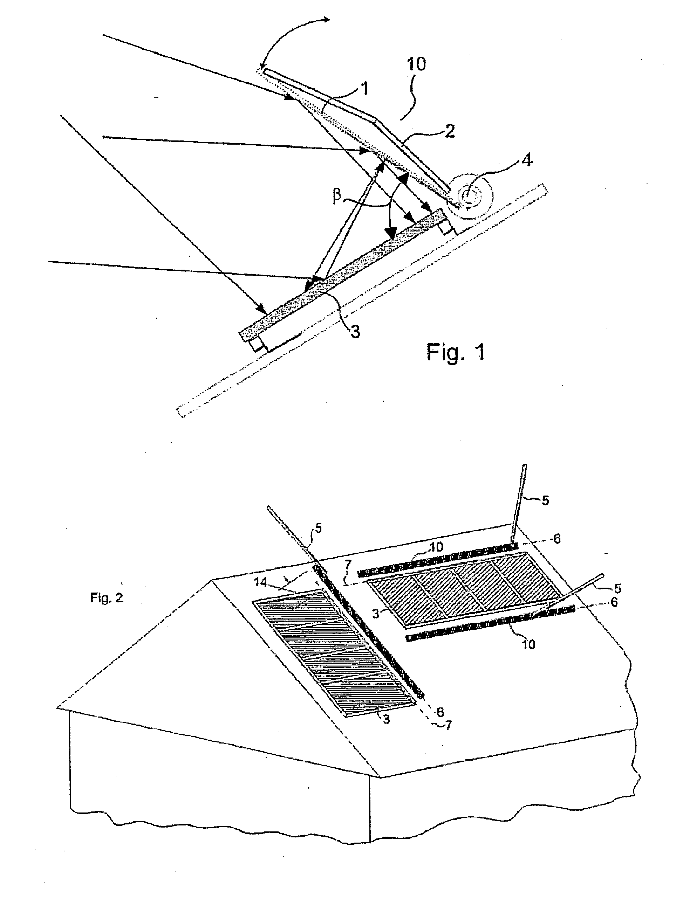

Eine Reflektorvorrichtung gemäß der Erfindung kann seitlich und/oder oberhalb bzw. unterhalb der Solareinrichtung angebracht sein (man vgl. Figur 2). Seitlicher Überstand des Reflektortuches gegenüber der Solareinrichtung ist vorteilhaft. Auf Verstellung des Längsachsen-Winkels kann verzichtet werden wenn z.B. eine angenäherte Optimierung auf wenige Monate sinnvoll ist. Vor allem bei Brauchwasseranlagen mit Heizungsunterstützung ist eine feste Winkeleinstellung wirtschaftlich. Die Optimierung erfolgt dabei auf die Monate Oktober, November, Februar und März. Die Mechanik wird dadurch sehr einfach und entspricht der Standardlösung einer normalen Sonnenschutz-Markise.

Ein besonderer Vorteil einer Reflektorvorrichtung gemäß der Erfindung besteht darin, dass diese von der Solareinrichtung vollständig getrennt montiert werden kann und dabei in Ihrer Längsachsrichtung schräg zur Längsachsrichtung der Solareinrichtung ausgerichtet werden kann. Dies hat insbesondere bei nicht genau nach Süden ausgerichteten Solareinrichtungen den Vorteil, dass die Abbildung der Reflektorfläche des Reflektortuches auf die Solareinrichtung (zum Beispiel Kollektor) durch eine solche "feste Schrägstellung" erheblich verbessert werden kann.

Die günstigste Position der Reflektorvorrichtung (oben, unten oder seitlich) hängt ab vom Neigungs- und Azimutwinkel der Solareinrichtung, aber auch von der Anwendung. Bei thermischen Solareinrichtungen, die auch zur Heizung verwendet werden, ist der Schwerpunkt des Anwendungszeitraumes Oktober - April. Hier ist, wegen des niedrigen Sonnen-Höhenwinkels, meist die Anbringung oben vorteilhaft. Bei ganzjährigem Betrieb (wie beispielsweise bei Voltaik-Anlagen), oder Hauptanwendung im Sommer (beispielsweise für eine Schwimmbadheizung) kann eine Anbringung unterhalb der Solareinrichtung vorteilhaft sein.

Die Wirkungsweise einer Refektorvorrichtung gemäß der Erfindung ist wie folgt:
Das auf das Reflektortuch eingestrahlte Sonnenlicht wird auf die Kollektoren bzw. Solarzellen gelenkt. Je nach Verhältnis von Reflektorfläche zu Kollektor- bzw. Solarzellenfläche und
mechanischem Aufwand wird die auf den Kollektor bzw. die Solarzellen eingestrahlte Leistung erhöht, günstigenfalls annähernd verdoppelt.

Bei sehr kleinen Einstrahlwinkeln wird ein großer Teil der direkten Strahlung von der Glasscheibe, die den Kollektor bzw. die Solarzellen abdeckt, reflektiert. Diese reflektierte Strahlung wird von der Refektorvorrichtung in einem günstigeren Winkel auf die Kollektoren bzw. Solarzellen zurück reflektiert und so von diesen zu einem großen Anteil absorbiert.

Ein besonders bedeutender Vorteil einer Reflektorvorrichtung gemäß der Erfindung beruht auf der Auf- und Ausrollbarkeit des Reflektortuches. Dadurch ist es möglich, die Mechanik wirtschaftlich zu gestalten. Der Kraftaufwand bei der Nachstellung des Öffnungswinkels zur Sonnenstandsnachführung kann aufgrund der Aufrollbarkeit des Reflektors deutlich verringert werden. Beispielsweise wird zum Nachführen des Reflektors der Reflektor jedes Mal zur Hälfte eingerollt, wodurch sich das Drehmoment, welches durch das Eigengewicht des Reflektorauslegers (= Reflektortuch + Gelenk- und/oder Teleskoparm) und den Winddruck erzeugt wird, deutlich verringert. Dies erlaubt den Einsatz einer vergleichsweise technisch einfach gestalteten Dreheinrichtung.

Die erfindungsgemäße Reflektorvorrichtung verringert zudem die Luftzirkulation über der Solareinrichtung, was bei solarthermischen Anlagen vorteilhafterweise zu einer Verringerung der Verluste am Kollektor durch Wärmeabgabe führt. Es können auch zusätzliche Mittel zur Windabschattung, wie beispielsweise seitliche Wände vorgesehen sein, die die Luftzirkulation über den Kollektoren weiter verringern. Bei Voltaikanlagen kann durch einen ausreichenden Abstand zur Befestigungsebene für ausreichende Belüftung gesorgt werden.

Ein weiterer Vorteil der Reflektorvorrichtung besteht darin, dass sie im Sommer zur Abschattung der Solareinrichtung genutzt werden kann, was insbesondere bei solarthermischen Anlagen von Bedeutung ist, weil die so genannte "Dampf-Phase" vermieden wird. Dies führt zu einer Schonung der Kollektoren und einer Verringerung der Wartungskosten da die Solarflüssigkeit weniger häufig gewechselt werden muss. Auch hier ergibt sich eine Steigerung des Wirkungsgrades der Anlage. Während der "Dampf-Phase" kann ein Wärmebedarf der Anlage nicht aus dem Kollektorkreislauf nachgeladen werden, da dieser abgeschaltet ist. Die Dampf-Phase wird, ohne künstliche Abschattung, erst aufgehoben, wenn die Sonneneinstrahlung auf einen entsprechend geringen Wert gesunken ist. Die künstliche Abschattung durch die Reflektorvorrichtung verhindert den Übergang in die Dampf-Phase oder hebt diese früher wieder auf. Wird die Reflektorvorrichtung nach aufheben der Dampf-Phase wieder in eine Wirkstellung gefahren, kann der angefallene Wärmebedarf sofort gedeckt werden.

Unter ästhetischen Gesichtspunkten hat die Reflektorvorrichtung gemäß der Erfindung gegenüber permanent sichtbare Sonnenspiegel den Vorteil, dass sie nur dann auffallend sichtbar werden, wenn sie auch ihre Funktion erfüllen. In der übrigen, weitaus größeren Zeit sind sie dagegen kaum sichtbar. Permanent sichtbare Sonnenspiegel können sich dagegen der Diskussion um die "Verunstaltung" der Landschaft oder des Stadtbildes nicht entziehen, wenn sie eine entsprechende Größe aufweisen oder in einer hohen Zahl aufgestellt werden.

Ein großer Vorteil einer Reflektorvorrichtung gemäß der Erfindung liegt, wie weiter oben bereits angedeutet, in der einfachen Nachrüstbarkeit des Systems. Bestehende Solaranlagen durch zusätzliche Kollektoren zu erweitern ist in der Regel aufwendig. Ein Preisvergleich zwischen einer Nachrüstung von 10qm Kollektorfläche und einer 10qm Markise ergibt einen Faktor 5 zu Gunsten der Markise. Bei flachen oder stark von der Südausrichtung abweichenden Dächern kann die Solarmarkise bei thermischen Anlagen sogar noch wesentlich wirtschaftlicher sein, da die Leistung gerade in den "abdeckungsarmen" Monaten erhöht wird.

Abschließend sei noch eine vorteilhafte Steuerung einer Reflektorvorrichtung gemäß der Erfindung zusammenfassen kurz umrissen:
Wird die Reflektorvorrichtung nicht benötigt, befindet sich das Reflektortuch in seiner Schutzposition eingerollt bzw.
eingefahren, ggf. in einem geschlossenen Kasten. In dieser Position bietet die Reflektorvorrichtung Wind und Wetter wenig Angriffsfläche.

Wird mit dem Strahlungssensor eine ausreichende, d.h. über einem einstellbaren Grenzwert liegende, Einstrahlungsleistung gemessen wird die Reflektorfunktion, sprich das Ausfahren bzw. Ausrollen des Reflektortuches aktiviert.

Zuerst wird festgestellt, ob ein für die Reflektorvorrichtung geeigneter Einstrahlungswinkel des Sonnenlichts vorliegt. Danach werden die Sperrbedingungen geprüft. Es darf keine zu hohe Windgeschwindigkeit vorliegen und ggf. kein Regen und keine Schneelast. Auch ein Festfrieren der Mechanik muss von der Steuerung berücksichtigt werden.

Liegen keine Sperrbedingungen vor wird das Reflektortuch in seine optimal mögliche Position gebracht. Dies geschieht durch Ausfahren bzw. Ausrollen des Reflektortuches und ggf. eine entsprechende Drehung zum optimalen Öffnungswinkel zwischen Reflektortuch und Solareinrichtung hin. Des Weiteren wird der optimale Längsachsen-Winkel eingestellt.

Treten während der "Arbeitsphase" erhöhte Windlasten auf wird die Reflektorvorrichtung automatisch teilweise oder ganz eingefahren.

Auf die Verstellbarkeit des Längsachsen-Winkels kann, um die Mechanik möglichst einfach zu gestalten, verzichtet und ein fester Winkel gewählt werden, der für einen bestimmten "Abdeckungszeitraum" optimiert ist. Die oben erläuterten durch die Verstellbarkeit des Winkels hervorgerufenen positiven Wirkungen entfallen dann natürlich.

Bei einer Solaranlage mit einer Solareinrichtung und einer Reflektorvorrichtung gemäß der Erfindung und deren vorteilhaften Ausführungsformen und Weiterbildungen ist eine elektronische Einrichtung vorgesehen, die die Funktionen der Reflektorvorrichtung witterungsabhängig steuert. Besonders bevorzugt ist eine elektronische Einrichtung vorgesehen, die sowohl die Funktionen der Solareinrichtung als auch Funktionen der Reflektorvorrichtung steuert.

Bei einer besonders zweckmäßigen Ausgestaltung einer Solaranlage mit einer Reflektorvorrichtung gemäß der Erfindung ist letztere von der Solareinrichtung baulich getrennt. Die Lage der Reflektorrichtung zur Solareinrichtung ist damit im Rahmen der Umgebungsgegebenheiten frei wählbar. Vorteilhafterweise kann dadurch einerseits die Reflektorvorrichtung bei bestehenden Solareinrichtungen auf technisch einfache Weise nachgerüstet werden und andererseits abhängig von der Ausrichtung der Solareinrichtung eine
- Schrägstellung der Längsachsrichtung der Reflektorvorrichtung zur Längsachsrichtung der Solareinrichtung und/oder
- seitlich versetzte Anordnung der Reflektorvorrichtung gegenüber der Solareinrichtung und/oder
- mit einem geeigneten Abstand zur Solareinrichtung versehene Anordnung der Reflektorvorrichtung
vorgesehen werden, um die Abbildung der Reflektorfläche auf die Solareinrichtung zu verbessern. Ein weiterer Vorteil der baulichen Trennung besteht darin, dass die Größe der Reflektorvorrichtung frei wählbar ist. Beispielsweise kann der Reflektor länger ausgeführt werden als der Kollektor, um bei schräg einfallender Strahlung noch eine 100%-Abdeckung des Kollektors zu erreichen. Zusätzlich oder alternativ kann der Reflektor breiter ausgeführt werden als der Kollektor, wodurch bei Idealwinkel ein Gewinn von mehr als 100% möglich ist. Ebenso kann mit Vorteil eine beliebige Anzahl von Reflektoren vorgesehen werden. Es gibt keinen festen Zusammenhang zwischen der Anzahl von Kollektoren und Reflektoren.

Bei einer weiterhin vorteilhaften Ausgestaltung einer Solaranlage sind mehrere Reflektorvorrichtungen gemäß der Erfindung entlang von mindestens zwei verschiedenen Seiten der Solareinrichtung angeordnet. Je nach Sonnenstand werden bei einer solchen Solaranlage nur diejenigen Reflektortücher ausgerollt, die einen Gewinn an Sonneneinstrahlung auf die Solareinrichtung bewirken.

Bei einem zweckmäßigen Verfahren zum Betrieb einer Solaranlage mit mindestens einer Reflektorvorrichtung gemäß der Erfindung wird ein Reflektortuch während eines Sonnenstandes, bei dem es eine zumindest teilweise Abschattung der Sonneneinstrahlung hervorrufen würde, teilweise oder vollständig in die Schutzposition aufgerollt.

Zum allgemeinen Verständnis sei angemerkt, dass jede solarthermische Anlage einen unteren Schwellenwert besitzt, bei der sie zu arbeiten beginnt, das heißt einen positiven Energieertrag generiert. Nur die Einstrahlungsleistung oberhalb trägt zum Energiegewinn bei. Liegt dieser Wert beispielsweise bei 100 W/m2 Einstrahlung wird bei einer Einstrahlung von 200 W/m2 nur 100 W/m2 nutzbare Energie gewonnen. Das heißt, bei 10 m2 Kollektorfläche 1 kW Nutzleistung. Erhöht die Reflektorvorrichtung die Einstrahlungsleistung um 50% von 200 W/m2 auf 300 W/m2 ergibt sich eine nutzbare Energieerzeugung von 2 kW, das heißt eine 100% Leistungserhöhung (Gewinn).

Eine erfindungsgemäße Reflektorvorrichtung und Solaranlagen mit solchen Reflektorvorrichtungen werden im Folgenden anhand eines Ausführungsbeispieles in Verbindung mit den Figuren 1 bis 8 näher erläutert.

Es zeigen:
Figur 1, eine schematische Darstellung eines senkrechten Schnittes durch das Ausführungsbeispiel,
Figuren 2 und 3, schematische Darstellungen von auf einem Dach montierten Reflektorvorrichtungen gemäß der Erfindung,
Figur 4, eine schematische Darstellung eines Ausführungsbeispieles für eine Solaranlage mit einer Reflektorvorrichtung gemäß der Erfindung,
Figur 5, eine schematische Darstellung eines weiteren Ausführungsbeispieles für eine Solaranlage mit einer Reflektorvorrichtung gemäß der Erfindung,
Figur 6, eine schematische Darstellung eines Ausführungsbeispieles für eine Solaranlage mit mehreren Reflektorvorrichtungen gemäß der Erfindung,
Figur 7, eine schematische Darstellung eines weiteren Ausführungsbeispieles für eine Solaranlage mit mehreren Reflektorvorrichtungen gemäß der Erfindung, und
Figur 8, eine schematische Darstellung zur Veranschaulichung von semi-diffuser Reflexion.

In den Figuren sind gleiche und gleich wirkende Bestandteile der verschiedenen Ausführungsbeispiele jeweils mit den gleichen Bezugszeichen versehen.

Bei der Reflektorvorrichtung 10 gemäß dem Ausführungsbeispiel (vgl. Figur 1) ist ein Reflektortuch 1 vorgesehen, das mittels einer Gelenk- und/oder Teleskoparm-Mechanik 2 von einer Schutzposition in eine Arbeitsposition über einer Solareinrichtung 3 ausrollbar und von der Arbeitsposition in die Schutzposition einrollbar ist. Alternativ ist denkbar, das Reflektortuch 1 aus einem bzw. in einen Zwischenraum zwischen Solareinrichtung und beispielsweise Dachfläche, auf der die Solareinrichtung montiert ist, in die Arbeitsposition auszufahren bzw. in die Schutzposition einzufahren. Als Gelenk- und/oder Teleskoparm-Mechanik 2 ist beispielsweise eine solche verwendet, wie sie von herkömmlichen Sonnenschutz-Markisen bekannt ist.

Das Reflektortuch kann semi-diffuse Reflexionseigenschaften aufweisen (nähere Erläuterung von "semi-diffus" siehe weiter oben iVm Figur 8). Für ein solches semi-diffuses Reflektortuch kann beispielsweise eine gut witterungsbeständige Filmleinwand verwendet werden. Ebenso ist die Verwendung einer Metallfolie mit mikroskopisch aufgerauter Oberfläche denkbar. Zum besseren Schutz des Reflektortuches 1 vor negativen Witterungseinflüssen ist ein geschlossener Kasten (ohne Darstellung) vorgesehen, in dem das Reflektortuch 1 in der Schutzposition vollständig verstaut ist. Dieser Kasten kann aus einem metallischen Werkstoff, beispielsweise Aluminium, oder einem anderen geeigneten, insbesondere witterungsbeständigen Material gefertigt sein.

An der Reflektorvorrichtung oder einer anderen geeigneten Stelle ist ein Strahlungssensor (ohne Darstellung), beispielsweise ein Photodiodensensor vorgesehen, der bei einer über einem vorgegebenen Grenzwert liegenden Einstrahlungsleistung der Sonnenstrahlung das Ausrollen des Reflektortuches 1 in die Arbeitsposition aktiviert. Dadurch wird beispielsweise ein Elektromotor (ohne Darstellung) eingeschaltet, der ein Getriebe zum Ausfahren der Gelenk- und/oder Teleskoparm-Mechanik 2 antreibt. Derartige Motoren und Antriebe sind beispielsweise aus der Technik für Sonnenschutz-Markisen bekannt und werden von daher an dieser Stelle nicht näher erläutert.

Die Reflektorvorrichtung 10 ist auf einer, entlang der Solareinrichtung 3 verlaufenden Drehachse 4 gelagert, derart, dass sich der vom Reflektortuch 1 und der Solareinrichtung 3 eingeschlossene Öffnungswinkel β mittels Drehen der Reflektorvorrichtung 10 um diese Drehachse verändern lässt. Dazu ist wiederum ein geeigneter herkömmlicher Elektroantrieb (ohne Darstellung) vorgesehen.

An der Reflektorvorrichtung 10 kann in der Nähe der Drehachse 4 eine über das gesamte Reflektortuch 1 verlaufende und an diesem anliegende Bürsten- oder Vliesleiste (nicht gezeigt) vorgesehen sein, die zur Reinigung des Reflektortuches insbesondere bei jedem Aufrollvorgang dient.

Das Reflektortuch ist aus einem Material gefertigt, das mehr als 90% des Sonnenspektrums und mehr als 90% des Wellenspektrums eines schwarzen Strahlers reflektiert.

Weiterhin ist ein Windsensor, und kann zudem ein Regensensor und/oder ein Schneesensor (alle ohne Darstellung) vorgesehen sein, mit denen die Windgeschwindigkeit, Regen bzw. Schneelast detektierbar ist und die eine an die Witterung angepasste Steuerung der Reflektorvorrichtung ermöglichen. Die Ausgestaltung derartiger Sensoren ist vom grundsätzlichen Prinzip her beispielsweise aus der Beschattungstechnik bzw. aus der Automobiltechnik bekannt und wird von daher an dieser Stelle nicht näher erläutert.

Weiterhin ist ein Sensor vorgesehen, mit dem der Einstrahlungswinkel der Sonnenstrahlung auf die Solareinrichtung detektierbar ist. Hierzu ebenso geeignet ist beispielsweise ein aus der Automobiltechnik bekannter Sonnenstandssensor. Alternativ kann eine vom Einstrahlungswinkel der Sonnenstrahlung abhängige Steuerung der Reflektorvorrichtung vermittels Berechnung über eine Kalender-Uhrzeit-Funktion erfolgen (mit Hilfe eines gespeicherten "Sonnenstandsdiagrammes).

Die oben beschriebene Solaranlage mit einer Solareinrichtung und einer Reflektorvorrichtung weist eine elektronische Einrichtung auf, die sowohl die Funktionen der Solareinrichtung als auch Funktionen der Reflektorvorrichtung steuert. Dadurch ist vorteilhafterweise der Aufwand für die elektronische Steuerung der Solaranlage verringert.

Den weiteren Beschreibungen von Solaranlagen sei vorausgeschickt, dass bei diesen durchweg beispielsweise Reflektorvorrichtungen gemäß Figur 1 verwendet sind. Selbstverständlich sind alternativ andere Reflektorvorrichtungen gemäß der Erfindung verwendbar.

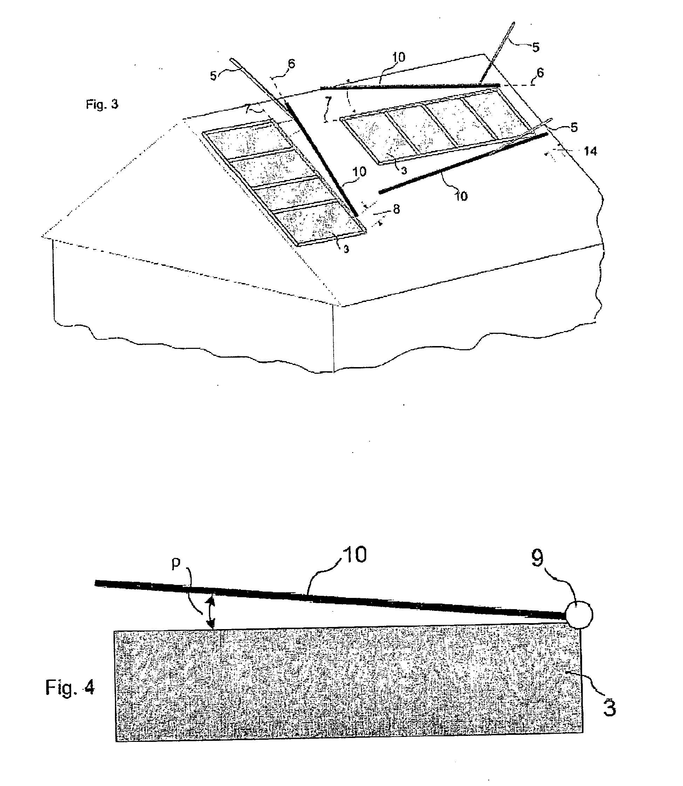

Bei den in den Figuren 2 und 3 gezeigten auf einem Gebäudedach montierten Solaranlagen sind Reflektorvorrichtungen 10 gemäß der Erfindung unterschiedlich positioniert zu Solareinrichtungen 3 angeordnet. Die in den Figuren 2 und 3 eingezeichneten Balken 5 deuten die Richtung der jeweiligen Reflektorvorrichtung 10 an. Die Solareinrichtungen sind beispielsweise Felder aus handelsüblichen (Sonnen-)Kollektoren.

Bei den Solaranlagen gemäß Figur 2 verläuft die Längsachsrichtung 6 der Reflektorvorrichtung 10 jeweils parallel zur Längsachsrichtung 7 der zugehörigen Solareinrichtung 3. Die Reflektorvorrichtungen 10 ragen zudem an einer Seite (oder an beiden Seiten (nicht gezeigt)) über die jeweils zugehörige Solareinrichtung 3 hinaus (Überlänge 14).

Bei den in Figur 3 dargestellten Solaranlagen verläuft die Längsachsrichtung 6 der Reflektorvorrichtung 10 jeweils schräg zur Längsachsrichtung 7 der zugehörigen Solareinrichtung 3. Zudem weist in einem Fall die Reflektorvorrichtung 10 einen seitlichen Versatz 8 zur Solareinrichtung auf. Der von der Längsachsrichtung 6 der Reflektorvorrichtung 10 und der Längsachsrichtung 7 der Solareinrichtung 3 eingeschlossene Längsachsen-Winkel ρ kann entweder durch entsprechende fixe Montage der Reflektorvorrichtung auf dem Dach fest eingestellt oder vermittels einer Drehvorrichtung 9 (vgl. die Ausführungsbeispiele gemäß den Figuren 4 bis 6 weiter unten) variabel einstellbar sein.

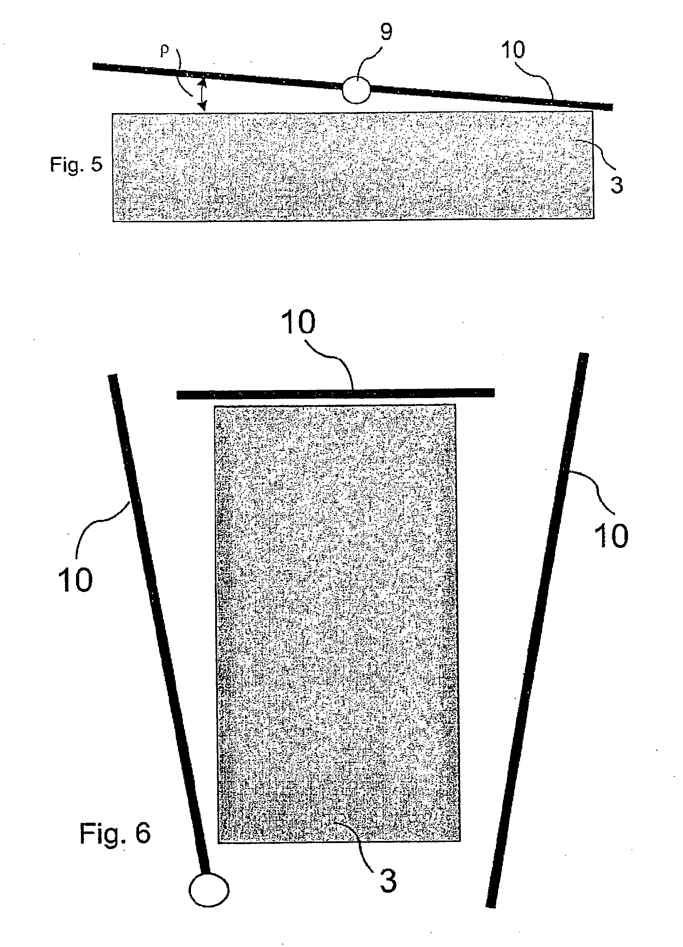

Bei den in den Figuren 4 und 5 dargestellten Solaranlagen ist jeweils die Längsachsrichtung 6 der Reflektorvorrichtung 10 vermittels einer Drehvorrichtung 9, beispielsweise mit einem elektrischen Stellmotor, an einem Ende bzw. in der Mitte der Reflektorvorrichtung 10 gegenüber der Längsachsrichtung 7 der Solareinrichtung 3 verdrehbar. Die Drehachse der Drehvorrichtung 9 verläuft hierbei jeweils senkrecht zur Längsachsrichtung 7 der Solareinrichtung 3.

Die Figur 6 zeigt eine Solaranlage, bei der entlang von drei Seiten der Solareinrichtung 3 je eine Reflektorvorrichtung 10 angeordnet ist, wobei die Längsachsrichtungen 6 der Reflektorvorrichtungen 10 an den Längsseiten der Solareinrichtung schräg zur Längsachsrichtung 7 der Solareinrichtung verlaufen.

Schließlich ist bei dem Ausführungsbeispiel gemäß Figur 7 als Solareinrichtung 3 ein Feld aus drei Kollektoren verwendet, an dessen Längsseiten jeweils drei Reflektorvorrichtungen 10 angeordnet sind, von denen die äußeren jeweils schräg zur Längsachsrichtung der Solareinrichtung 3 gestellt sind.

Beim Betrieb einer Solaranlage gemäß einem der oben erläuterten Ausführungsbeispiele wird ein Reflektortuch während eines Sonnenstandes, bei dem es eine zumindest teilweise Abschattung der Sonneneinstrahlung hervorrufen würde, teilweise oder vollständig in die Schutzposition aufgerollt.

Die Erläuterung der Erfindung anhand der Ausführungsbeispiele ist selbstverständlich nicht als Beschränkung der Erfindung auf diese Ausführungsbeispiele oder auf einzelne konkrete Elemente dieser Ausführungsbeispiele zu verstehen. Vielmehr können die im der Beschreibung der Ausführungsbeispiele vorangehenden allgemeinen Teil der Beschreibung genannten Bestandteile von vorteilhaften Ausführungsformen und Weiterbildungen unter Zugrundelegung der der Erfindung innewohnenden grundlegenden Idee frei und bedarfsabhängig untereinander kombiniert, weggelassen oder mit zusätzlichen Elementen kombiniert werden. Insbesondere ist die Erfindung auch auf "freistehende" Kollektoren anwendbar und nicht auf Dachkonstruktionen beschränkt.

## Patentansprüche

1. Reflektorvorrichtung (10) für eine Solareinrichtung (3), die mindestens ein Reflektortuch (1) aufweist, das mittels einer Gelenk- und/oder Teleskoparm-Mechanik (2) von einer Schutzposition in eine Arbeitsposition und umgekehrt aus- und aufrollbar ist, **dadurch gekennzeichnet, dass** die Reflektorvorrichtung von der Solareinrichtung baulich getrennt montierbar ist, derart, dass die Lage der Reflektorvorrichtung zur Solareinrichtung im Rahmen der Umgebungsgegebenheiten frei wählbar ist.

2. Reflektorvorrichtung nach Anspruch 1, bei der das Reflektortuch semi-diffuse Reflexionseigenschaften aufweist.

3. Reflektorvorrichtung nach einem der Ansprüche 1 und 2, bei der das Reflektortuch mehr als 80% des Sonnenspektrums und mehr als 80% des Wellenspektrums eines schwarzen Strahlers reflektiert.

4. Reflektorvorrichtung nach einem der Ansprüche 1 bis 3, bei der ein Strahlungssensor vorgesehen ist, der bei einer über einem vorgegebenen Grenzwert liegenden Einstrahlungsleistung der Sonnenstrahlung den Transport des Reflektortuches in die Arbeitsposition aktiviert.

5. Reflektorvorrichtung nach einem der Ansprüche 1 bis 4, bei der ein Sensor/Sensoren vorgesehen ist/sind, mit dem/denen die Windgeschwindigkeit, Regen und/oder Schneelast und/oder ein Festfrieren der Mechanik detektierbar ist/sind.

6. Solaranlage mit einer Solareinrichtung und einer Reflektorvorrichtung nach einem der Ansprüche 1 bis 5, bei der die Reflektorvorrichtung von der Solareinrichtung baulich getrennt ist.

7. Solaranlage nach Anspruch 6, bei der der vom Reflektortuch (1) und einer strahlungsempfangenden Oberfläche der Solareinrichtung (3) eingeschlossene Winkel β abhängig vom Winkel der Sonneneinstrahlung einstellbar ist.

8. Solaranlage nach Anspruch 6 oder 7, bei der ein Sensor vorgesehen ist, mit dem der Einstrahlungswinkel der Sonnenstrahlung auf die Solareinrichtung detektierbar ist.

9. Solaranlage nach Anspruch 6 oder 7, bei der eine elektronische Einrichtung vorgesehen ist, die den Einstrahlungswinkel der Sonnenstrahlung auf die Solaranlage über eine Kalender-Uhrzeit-Funktion und den geografischen Daten des Standortes berechnet.

10. Solaranlage nach einem der Ansprüche 6 bis 9, wobei die Reflektorvorrichtung (10) eine Drehvorrichtung (9) aufweist, deren Drehachse senkrecht zur Längsachsrichtung der Solareinrichtung verläuft.

11. Solaranlage nach einem der Ansprüche 6 bis 10, bei der eine Längsachsrichtung der Reflektorvorrichtung und eine Längsachsrichtung der Solareinrichtung schräg zueinander verlaufen.

12. Solaranlage mit einer Solareinrichtung und einer Mehrzahl von Reflektorvorrichtungen (10) nach einem der Ansprüche 1 bis 5, wobei diese entlang von mindestens zwei verschiedenen Seiten der Solareinrichtung angeordnet sind.

13. Solaranlage nach Anspruch 12, bei der der von Reflektortüchern (1) und einer strahlungsempfangenden Oberfläche der Solareinrichtung (3) eingeschlossene Winkel β abhängig vom Winkel der Sonneneinstrahlung einstellbar ist.

14. Verfahren zum Betrieb einer Solaranlage gemäß einem der Ansprüche 6 bis 13, bei dem ein Reflektortuch während eines Sonnenstandes, bei dem es eine zumindest teilweise Abschattung der Sonneneinstrahlung hervorrufen würde, teilweise oder vollständig in die Schutzposition aufgerollt wird.

15. Verfahren zum Betrieb einer Solaranlage nach einem der Ansprüche 6 bis 14, bei dem das Reflektortuch bedarfsweise zur Abschattung der Solareinrichtung genutzt wird.

## Claims

1. Reflector apparatus (10) for a solar device (3), which has at least one reflective fabric (1) which can be rolled out and rolled up from a protection position into a working position and vice versa by means of a hinged and/or telescopic arm mechanism (2), **characterized in that** the reflector apparatus can be mounted in a fashion structurally separate from the solar device in such a way that the position of the reflector apparatus in relation to the solar device can be freely selected in the context of the environmental conditions.

2. Reflector apparatus according to Claim 1, in which the reflector fabric has semi-diffuse reflection characteristics.

3. Reflector apparatus according to either of Claims 1 and 2, in which the reflector fabric reflects more than 80% of the solar spectrum and more than 80% of the wave spectrum of a black body radiator.

4. Reflector apparatus according to one of Claims 1 to 3, in which a radiation sensor is provided which activates the transport of the reflector fabric into the working position in the case of a radiated power of the solar radiation which is above a prescribed limit value.

5. Reflector apparatus according to one of Claims 1 to 4, in which a sensor/sensors is/are provided with the aid of which the wind speed, rain and/or snow load and/or freezing of the mechanism can be detected.

6. Solar plant having a solar device having a reflector apparatus according to one of Claims 1 to 5, in which the reflector apparatus is structurally separate from the solar device.

7. Solar plant according to Claim 6, in which the angle β enclosed by the reflector fabric (1) and a surface of the solar device (3) which receives radiation can be set as a function of the angle of the solar irradiation.

8. Solar plant according to Claim 6 or 7, in which a sensor is provided with the aid of which the incident angle of the solar radiation onto the solar device can be detected.

9. Solar plant according to Claim 6 or 7, in which an electronic device is provided which calculates the incident angle of the solar radiation onto the solar plant via a calendar/time-of-day function and the geographical data of the site.

10. Solar plant according to one of Claims 6 to 9, in which the reflector apparatus (10) has a rotating apparatus (9) whose axis of rotation runs perpendicular to the direction of the longitudinal axis of the solar device.

11. Solar plant according to one of Claims 6 to 10, in which a direction of the longitudinal axis of the reflector apparatus and a direction of the longitudinal axis of the solar device run obliquely relative to one another.

12. Solar plant having a solar device and a plurality of reflector apparatuses (10) according to one of Claims 1 to 5, in which the latter are arranged along at least two different sides of the solar device.

13. Solar plant according to Claim 12, in which the angle β enclosed by the reflector fabrics (1) and a surface of the solar device (3) which receives radiation can be set as a function of the angle of solar irradiation.

14. Method for operating a solar plant in accordance with one of Claims 6 to 13, in which while the sun is in a position which would cause an at least partial shading of the solar irradiation, a reflector fabric is rolled up partially or completely into the protection position.

15. Method for operating a solar plant according to one of Claims 6 to 14, in which the reflector fabric is used if required to shade the solar device.

## Revendications

1. Ensemble de réflexion (10) pour système solaire (3), qui présente au moins une toile réfléchissante (1) qui peut être déroulée ou enroulée depuis une position de protection jusque dans une position de travail et inversement au moyen d'un mécanisme (2) à bras articulé et/ou à bras télescopique,
**caractérisé en ce que**
l'ensemble de réflexion peut être monté séparément du système solaire sur le bâtiment de telle sorte que la position de l'ensemble de réflexion par rapport au système solaire puisse être sélectionnée librement dans le cadre des conditions ambiantes.

2. Ensemble de réflexion selon la revendication 1, dont la toile réfléchissante présente des propriétés de réflexion semi-diffuse.

3. Ensemble de réflexion selon l'une des revendications 1 et 2, dans lequel la toile réfléchissante réfléchit plus de 80 % du spectre solaire et plus de 80 % du spectre émis par un corps noir.

4. Ensemble de réflexion selon l'une des revendications 1 à 3, qui présente une sonde de rayonnement qui active le transport de la toile réfléchissante dans la position de travail lorsque la puissance du rayonnement solaire incident est supérieure à une valeur limite prédéterminée.

5. Ensemble de réflexion selon l'une des revendications 1 à 4, qui présente un ou plusieurs détecteurs qui permettent de détecter la vitesse du vent, la pluie, la charge de la neige et/ou le blocage du mécanisme par le gel.

6. Installation solaire dotée d'un système solaire et d'un dispositif réfléchissant selon l'une des revendications 1 à 5, dans lequel le dispositif réfléchissant est structurellement séparé du système solaire.

7. Installation solaire selon la revendication 6, dans lequel l'angle β formé entre la toile réfléchissante (1) et la surface du système solaire (3) qui reçoit le rayonnement peut être ajusté en fonction de l'angle du rayonnement solaire incident.

8. Installation solaire selon les revendications 6 ou 7, qui présente une sonde qui permet de détecter l'angle d'incidence du rayonnement solaire sur le système solaire.

9. Installation solaire selon les revendications 6 ou 7, qui présente un dispositif électronique qui calcule l'angle d'incidence du rayonnement solaire sur le système solaire par l'intermédiaire d'une fonction d'heure et de calendrier et des données géographiques du site.

10. Installation solaire selon l'une des revendications 6 à 9, dans lequel le dispositif réfléchissant (10) présente un dispositif de rotation (9) dont l'axe s'étend perpendiculairement à l'axe longitudinal du système solaire.

11. Installation solaire selon les revendications 6 à 10, dans lequel la direction de l'axe longitudinal de l'ensemble de réflexion et la direction de l'axe longitudinal du système solaire sont obliques l'une par rapport à l'autre.

12. Installation solaire présentant un système solaire et plusieurs dispositifs réfléchissants (10) selon l'une des revendications 1 à 5 disposés sur au moins deux côtés différents du système solaire.

13. Installation solaire selon la revendication 12, dans lequel l'angle β formé entre les toiles réfléchissantes (1) et la surface du système solaire (3) qui reçoit le rayonnement peut être ajusté en fonction de l'angle incident du rayonnement solaire.

14. Procédé de gestion d'une installation solaire selon l'une des revendications 6 à 13, dans lequel une toile réfléchissante est enroulée partiellement ou totalement dans la position de protection lorsque la position du soleil pourrait masquer au moins en partie le rayonnement solaire incident.

15. Procédé de gestion d'une installation solaire selon l'une des revendications 6 à 14, dans lequel la toile réfléchissante est si nécessaire utilisée pour masquer le système solaire.
